# EUROPEAN PATENT APPLICATION

(11) **EP 4 848 686 A1**
(43) Date of publication of application: **02.12.2026**
(21) Application number: 25896951.8
(22) Date of filing: 10.10.2025
(51) Int. Cl.: H04L 47/122

(54) **CONGESTION PROCESSING METHOD AND APPARATUS FOR COMMUNICATION NETWORK, DEVICE, MEDIUM AND PRODUCT**

(30) Priority: 26.11.2024 CN 202411708532
(71) Applicant: TENCENT TECHNOLOGY (SHENZHEN) COMPANY LIMITED, Shenzhen, Guangdong 518057 (CN)
(72) Inventor: HU, Jiayu, Shenzhen, Guangdong 518057 (CN); JIN, Feng, Shenzhen, Guangdong 518057 (CN); ZHOU, Xianping, Shenzhen, Guangdong 518057 (CN); SHEN, Zhen, Shenzhen, Guangdong 518057 (CN); LUO, Yongkang, Shenzhen, Guangdong 518057 (CN)
(74) Representative: EP&C
(86) International application number: PCT/CN2025/126782
(87) International publication number: WO 2026/113655

(57) **Abstract**

Provided in the embodiments of the present application are a congestion processing method and apparatus for a communication network, a device, a medium and a product. A communication network comprises a first device and a second device, and a plurality of network paths (used for transmitting data streams between the first device and the second device) are provided between the first device and the second device. The method is executed by the first device, and comprises: determining from amongst the plurality of network paths a first network path that is congested; acquiring preset migration control information, the migration control information being used for controlling the migration granularity of stream migration, and the migration granularity being used for indicating migration traffic of the stream migration; selecting a non-congested second network path from amongst the plurality of network paths; and, on the basis of the control by means of the migration control information, selecting, from amongst data streams transmitted on the first network path, a data stream whose traffic is the migration traffic, and migrating the selected data stream onto the second network path for transmission. The embodiments of the present application can quickly alleviate congestion of communication networks.

## Description

### RELATED APPLICATION

This disclosure claims priority to Chinese Patent Application No. 202411708532.0, entitled "CONGESTION PROCESSING METHOD AND APPARATUS FOR COMMUNICATION NETWORK, DEVICE, MEDIUM, AND PRODUCT", filed with the China National Intellectual Property Administration on November 26, 2024.

### FIELD OF THE TECHNOLOGY

This disclosure relates to the field of computer technologies, and in particular, to a congestion processing method for a communication network, a congestion processing apparatus for a communication network, a computer device, a computer-readable storage medium, and a computer program product.

### BACKGROUND OF THE DISCLOSURE

A communication network may be configured to transmit data flows, and data flows may be transmitted from one device in the communication network to another device in the communication network. A communication network is a physical network, and congestion in the physical network is unavoidable. Once the physical network is congested, the transmission delay of data flows may increase due to queuing or packet loss, seriously affecting the smooth execution of upper-layer services based on the data flows. Therefore, after a communication network is congested, how to rapidly alleviate the congestion in the communication network has become a research focus in the related art.

### SUMMARY

Embodiments of this disclosure provide a congestion processing method and apparatus for a communication network, a device, a medium, and a product, capable of rapidly alleviating congestion in the communication network.

In one aspect, the embodiments of this disclosure provide a congestion processing method for a communication network, executable by a first device in the communication network, and the method comprising:
determining, from a plurality of network paths between the first device and a second device in the communication network, a first network path being congested;
acquiring preset migration control information for controlling a migration granularity of a flow migration, the flow migration indicating migrating data flows being transmitted on the first network path to a non-congested network path, and the migration granularity indicating migration traffic of the flow migration;
selecting, from the plurality of network paths, a second network path being non-congested; and
selecting, based on the migration control information, from data flows transmitted on the first network path, data flows having traffic corresponding to the migration traffic, and migrating the selected data flows to be transmitted on the second network path.

Correspondingly, the embodiments of this disclosure provide a congestion processing apparatus for a communication network, the congestion processing apparatus being disposed in a first device in the communication network including:
a processing unit, configured to determine, from a plurality of network paths between the first device and a second device in the communication network, a first network path being congested;
the processing unit, further configured to acquire preset migration control information for controlling a migration granularity of a flow migration, the flow migration indicating migrating data flows being transmitted on the first network path to a non-congested network path, and the migration granularity indicating migration traffic of the flow migration;
the processing unit, further configured to select, from the plurality of network paths, a second network path being non-congested;
the processing unit, further configured to select, based on the migration control information, from data flows transmitted on the first network path, data flows having traffic corresponding to the migration traffic; and
a communication unit, configured to migrate the selected data flows to be transmitted on the second network path.

Correspondingly, the embodiments of this disclosure provide a computer device, the computer device including:
a processor configured to implement a computer program; and
a computer-readable storage medium having a computer program stored therein, the computer program being configured to be loaded and executed by the processor to perform the congestion processing method for a communication network described above.

Correspondingly, the embodiments of this disclosure provide a computer-readable storage medium having a computer program stored therein, the computer program, when read and executed by a processor of a computer device, causing the computer device to perform the congestion processing method for a communication network described above.

Correspondingly, the embodiments of this disclosure provide a computer program product including a computer program, the computer program being stored in a computer-readable storage medium. A processor of a computer device reads the computer program from the computer-readable storage medium and executes the computer program, such that the computer device performs the congestion processing method for a communication network described above.

In the embodiments of this disclosure, a congested first network path may be determined from a plurality of network paths between the first device and the second device. The embodiments of this disclosure provide congestion detection capability, enabling congested network paths to be identified promptly, thereby facilitating the rapid mitigation of congestion on the network paths. After determining a congested first network path from the plurality of network paths between the first device and the second device, preset migration control information may be acquired. The migration control information may be configured for controlling a migration granularity of a flow migration. The flow migration refers to migrating data flows transmitted on a congested network path to a non-congested network path for transmission, and the migration granularity may be configured for indicating migration traffic of the flow migration. The embodiments of this disclosure may implement controlled flow migration based on the migration control information. Such controlled flow migration may avoid congestion on a network path to which the data flow is migrated due to excessive migration traffic, or may avoid congestion on a network path from which the data flow is migrated failing to alleviate due to insufficient migration traffic. After acquiring the migration control information, data flows having traffic corresponding to the migration traffic may be selected, based on the control of the migration control information, from data flows transmitted on the first network path, and the selected data flows are migrated to a non-congested second network path between the first device and the second device for transmission. For a congested network path in a communication network, the embodiments of this disclosure may, through a single flow migration operation, migrate a data flow of specified traffic (i.e., the migration traffic) from the congested network path to a non-congested network path. The flow migration is performed only once rather than a plurality of times, and the migration target is a non-congested network path rather than a congested network path, thereby enabling rapid alleviation of congestion in the communication network.

### BRIEF DESCRIPTION OF THE DRAWINGS

FIG. 1 is a schematic architectural diagram of a communication network according to some embodiments of this disclosure.
FIG. 2 is a schematic architectural diagram of a congestion processing system according to some embodiments of this disclosure.
FIG. 3 is a schematic diagram of a use scenario of a congestion processing method according to some embodiments of this disclosure.
FIG. 4 is a schematic flow diagram of a congestion processing method for a communication network according to some embodiments of this disclosure.
FIG. 5 is a schematic diagram of a path selection policy for a communication network according to some embodiments of this disclosure.
FIG. 6 is a schematic diagram of selecting a non-congested network path of a communication network according to some embodiments of this disclosure.
FIG. 7 is a schematic diagram of path allocation for traffic migration according to some embodiments of this disclosure.
FIG. 8 is a schematic diagram of path identifier switching according to some embodiments of this disclosure.
FIG. 9 is a schematic diagram of a traffic balancing policy for a communication network according to some embodiments of this disclosure.
FIG. 10 is a schematic flow diagram of another congestion processing method for a communication network according to some embodiments of this disclosure.
FIG. 11 is a schematic diagram of a path control policy for a communication network according to some embodiments of this disclosure.
FIG. 12 is a schematic diagram of a congestion probing policy for a communication network according to some embodiments of this disclosure.
FIG. 13 is a schematic diagram of another congestion probing policy for a communication network according to some embodiments of this disclosure.
FIG. 14 is a schematic structural diagram of a congestion probing apparatus for a communication network according to some embodiments of this disclosure.
FIG. 15 is a schematic structural diagram of a computer device according to some embodiments of this disclosure.

### DESCRIPTION OF EMBODIMENTS

To enable a clearer understanding of technical solutions according to embodiments of this disclosure, the technical terms involved in the embodiments of this disclosure are first described as follows:

### 1. Communication network:

A communication network refers to a data center network, specifically a physical network configured for transmitting data flows. A physical network refers to a network constructed in a physical environment via physical devices (e.g., servers, routers, and switches) and physical media (e.g., optical cables, electrical cables, and twisted pairs). Such a network environment physically exists and may be directly accessed and managed.

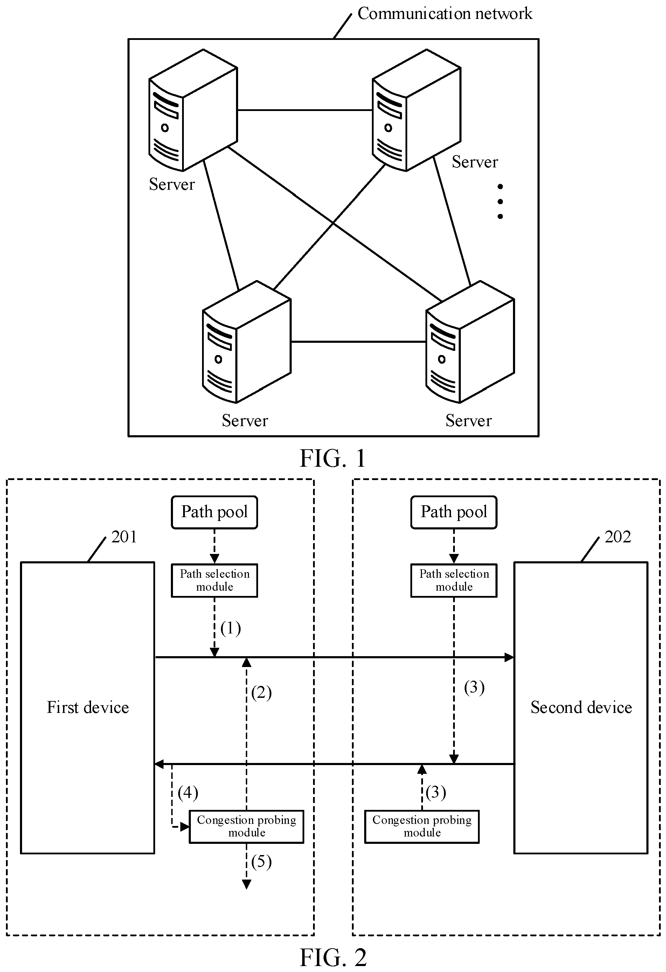

As shown in FIG. 1, the communication network may include a plurality of devices, where the devices refer to servers. A plurality of network paths may be provided between any two of the devices, and the network paths may be configured for transmitting data flows between any two devices. The communication network in the embodiments shown in FIG. 1 is provided merely for clearer illustration of the technical solutions of the embodiments of this disclosure and shall not be construed as limiting the technical solutions according to some embodiments of this disclosure. A person of ordinary skill in the art may appreciate that, with the evolution of network architectures and the emergence of new service scenarios, the technical solutions according to some embodiments of this disclosure are equally applicable to similar technical problems.

The embodiments of this disclosure are illustrated in an example where any two devices in the communication network are a first device and a second device. A plurality of network paths may be provided between the first device and the second device, and any one of the network paths between the first device and the second device may be configured for transmitting data flows between the first device and the second device. In the first device and the second device, the device that transmits data flows may be referred to as a transmitting device, and the device that receives data flows may be referred to as a receiving device. The embodiments of this disclosure are illustrated in an example where the first device is a transmitting device that transmits data flows, and the second device is a receiving device that receives data flows. In this case, the first device may transmit the data flow obtained by the first device to the second device. In some embodiments, the first device may be a receiving device that receives data flows, and the second device may be a transmitting device that transmits data flows.

The server mentioned in the embodiments of this disclosure may be an independent physical server, a server cluster or a distributed system including a plurality of physical servers, or a cloud server providing basic cloud computing services such as cloud services, cloud databases, cloud computing, cloud functions, cloud storage, network services, cloud communication, middleware services, domain name services, security services, content delivery network (CDN), as well as big data and artificial intelligence platforms.

### 2. Data flow:

A data flow refers to a sequence including network packets continuously transmitted between a source (i.e., a transmitting device) and a destination (i.e., a receiving device). A network packet refers to a data unit exchanged and transmitted in a communication network. For network packets in a same data flow, these network packets have the same packet information. The packet information herein refers to a five-tuple, which may include an Internet protocol (IP) source address, an IP destination address, a Layer-4 source port, a Layer-4 destination port, and a Layer-4 protocol type. The packet information may be configured for uniquely identifying a network connection in network communication, ensuring correct transmission and processing of network packets.

Based on the descriptions of technical terms such as the communication network and data flow described above, the embodiments of this disclosure provide a congestion processing method for a communication network (LBHarp), capable of rapidly alleviating congestion in the communication network. In particular, the congestion processing method for a communication network proposes a network congestion probing mechanism. The network congestion probing mechanism may, by real-time probing of the transmission delay on all network paths between any two devices in the communication network, probe a congested network path within a predetermined time period. The congestion processing method for a communication network further proposes a low-overhead traffic balancing policy. For a congested network path, the traffic balancing policy enables, through a single path switching operation (i.e., a single flow migration), data flows transmitted on the congested network path to be migrated to a non-congested network path for transmission. The congestion processing method for a communication network according to some embodiments of this disclosure has two advantages. The first advantage is that the method may ensure detection of a congested network path within a predetermined time period. The second advantage is that, after a network path is congested, data flows transmitted on the congested network path may be rapidly migrated to a non-congested network path for transmission through a single path switch (i.e., a single flow migration), thereby enabling the transmission delay of the data flows to rapidly recover from congestion in the communication network.

In addition, the congestion processing method for a communication network is a software solution that does not require dedicated hardware support. Therefore, the congestion processing method for a communication network can be deployed in all communication networks. For example, the method may be applicable to communication networks using conventional devices, may be applicable to communication networks that do not support Internet Protocol version 6 (IPv6), and may further be applicable to communication networks that support IPv6.

The congestion processing method for a communication network according to some embodiments of this disclosure may be performed by a computer device. The computer device may be any transmitting device that transmits data flows in the communication network (the embodiments of this disclosure are illustrated in an example where the transmitting device is a first device). The first device transmits data flows to a second device via network paths provided between the first device and the second device.

The congestion processing system in which the computer device is located is shown in FIG. 2. The congestion processing system may include a first device 201 and a second device 202, where the first device 201 serves as a transmitting device that transmits data flows, and the second device 202 serves as a receiving device that receives data flows. A plurality of network paths may be provided between the first device 201 and the second device 202, and any one of the network paths between the first device 201 and the second device 202 may be configured for transmitting data flows obtained by the first device 201 to the second device 202.

In the congestion processing system including the first device 201 and the second device 202, the congestion processing method according to some embodiments of this disclosure manages all network paths between the first device 201 and the second device 202 and probes congestion conditions of the network paths in real time. The first device 201 may periodically transmit probe messages (i.e., round trip time (RTT) probe messages) over a probed network path. The second device 202 may periodically return reply messages (i.e., RTT reply messages) to the first device 201. The first device 201 may calculate the communication delay time of the probed network path (i.e., the RTT value) according to the reply messages. When the RTT value of the probed network path exceeds a time threshold, or when the first device 201 does not receive a reply message within a specified time period, it may be determined that the probed network path is congested. Conversely, when the first device 201 receives a reply message within a specified time period and the RTT value does not exceed a time threshold, it may be determined that the probed network path is not congested. For a network path determined to be congested, the first device 201 may migrate data flows of specified traffic on the congested network path to a non-congested network path for transmission, thereby rebalancing the network load.

Each of the first device 201 and the second device 202 may include a path pool, a path selection module, a congestion probing module, and a congestion recovery module. Specifically:

The path pool may include path identifiers (path IDs) of a plurality of network paths between the first device 201 and the second device 202, and a path identifier of any one of the network paths may uniquely identify the network path. The path selection module may be configured to select a non-congested network path for each data flow, and all network packets belonging to the same data flow are forwarded through the selected network path. The congestion probing module may be configured to periodically perform congestion probing on the network paths between the first device 201 and the second device 202. Congestion probing on any one of the network paths refers to the first device 201 transmitting an RTT probe message to the second device 202 via the network path. After receiving the RTT probe message, the second device 202 returns an RTT reply message. The first device 201 may determine congestion conditions of the network path according to whether the RTT reply message is received within a specified time period, or may calculate an RTT value according to the time at which the RTT reply message is received within the specified time period, and determine whether the network path is congested according to the RTT value. The congestion recovery module may be configured to, after a network path is congested, migrate data flows transmitted on the congested network path to a non-congested network path for transmission.

In a congestion processing system including a first device 201 and a second device 202, the congestion processing procedure may specifically include: (1) For data flows obtained by the first device 201, a path selection module of the first device 201 may select a non-congested network path for each data flow, and all network packets in a data flow are forwarded through the selected network path. (2) A congestion probing module of the first device 201 may periodically transmit probe messages to the second device 202 via the network paths between the first device 201 and the second device 202. (3) A congestion probing module of the second device 202 may process the received probe messages and periodically return reply messages to the first device 201. In this process, a path selection module of the second device 202 may select a non-congested network path for returning the reply messages. (4) After the first device 201 receives the reply messages, the congestion probing module of the first device 201 may calculate RTT values of the network paths, and determine whether the network paths are congested according to the RTT values of the network paths. Alternatively, when the first device 201 does not receive the reply messages within a specified time period, it may be determined that the network paths are congested. (5) When a network path is determined to be congested one or more consecutive times, a congestion recovery module of the first device 201 may migrate data flows transmitted on the congested network path to a non-congested network path for transmission. After completion of the data flow migration from the congested network path, the congestion probing module of the first device 201 may resume congestion probing on the network path.

The congestion processing system shown in FIG. 2 may, after a network path is congested, rapidly migrate data flows transmitted on the congested network path to a non-congested network path through a single path switch (i.e., a single flow migration), thereby rapidly alleviating congestion. The congestion processing system in the embodiments shown in FIG. 2 is provided merely for clearer illustration of the technical solutions of the embodiments of this disclosure and shall not be construed as limiting the technical solutions according to some embodiments of this disclosure. A person of ordinary skill in the art may appreciate that, with the evolution of system architectures and the emergence of new service scenarios, the technical solutions according to some embodiments of this disclosure are equally applicable to similar technical problems.

The use scenarios of the congestion processing method for a communication network according to some embodiments of this disclosure are described below.

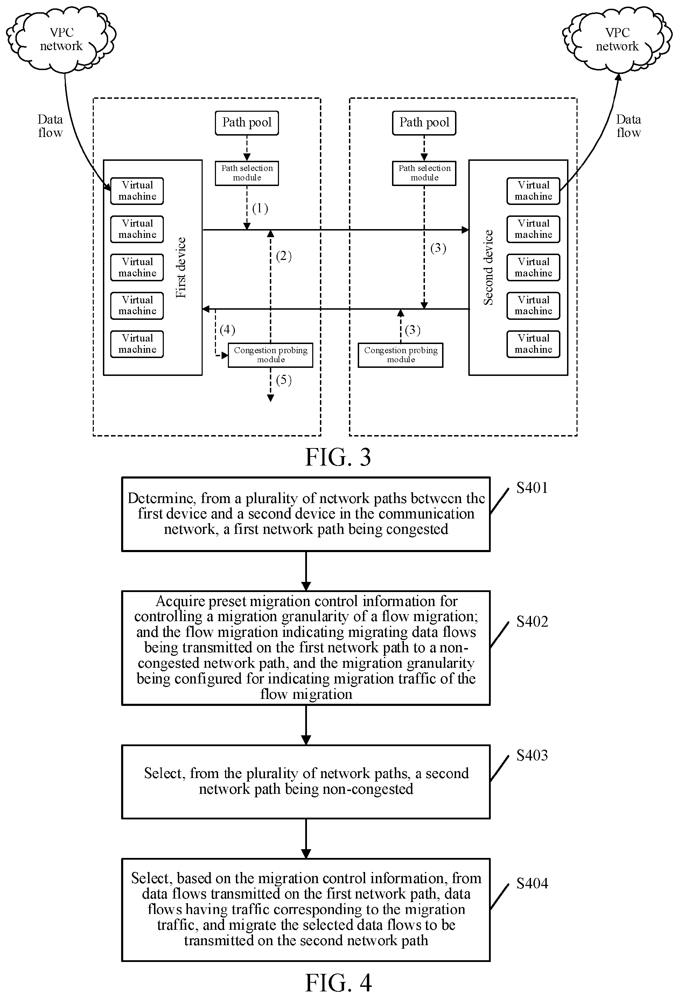

As shown in FIG. 3, a server in the communication network (e.g., a first device and a second device) may include a plurality of virtual machines (VMs). The server may be referred to as a host machine, and the virtual machines may be referred to as guest machines. The virtual machines are processes running on the server. VM tenants (also referred to as public cloud tenants) may purchase virtual machines on servers via a virtual private cloud (VPC) service, and create and manage private virtual networks on a public cloud based on the virtual machines. Such virtual networks may be referred to as VPC networks. The virtual machines serve as communication entities in the VPC networks, similar to servers in a communication network. The VPC service is a type of cloud service, where a cloud service refers to a network service based on cloud computing. The VPC service provides a logically isolated network environment, allowing public cloud tenants to create VPC networks on a public cloud and customize network configurations of the created VPC networks (for example, network segments). That is, the VPC service can provide public cloud tenants with network customization capabilities in a public cloud environment. A public cloud tenant refers to a user who accesses and uses computing resources and cloud services provided by a cloud service provider over the Internet in a public cloud environment.

Therefore, a VPC network is a virtual network created based on a communication network. The VPC network operates on a communication network, which is specifically reflected in that data flows in the VPC network enter the communication network via virtual machines for transmission. After a transmitting device in the communication network (for example, the first device in FIG. 3) receives egress traffic from a virtual machine (i.e., data flows of the VPC network entering the communication network via the virtual machine), the transmitting device allocates a non-congested network path to the data flows for transmission. After the data flows are transmitted to a receiving device in the communication network (for example, the second device in FIG. 3), the data flows enter the VPC network via a virtual machine. That is, data flows transmitted in the communication network are data flows in the VPC network.

The delay and throughput of a VPC network are key metrics for evaluating a VPC service. However, congestion in a physical network is unavoidable in a communication network. Once the physical network is congested, the delay of the VPC network increases due to queuing or packet loss. In addition, with the emergence of cloud applications requiring extremely low network delay (for example, Redis, a cloud database), a low-delay VPC network has become one of the key factors for ensuring the service quality of cloud products. Therefore, after a physical network is congested, how to rapidly reduce the delay of the VPC network, thereby enabling public cloud tenants and cloud applications to rapidly recover from congestion, has become an urgent problem to be solved.

The congestion processing method for a communication network according to some embodiments of this disclosure may rapidly probe, within a specified time period, congested network paths in the communication network, and, after probing a congested network path, rapidly migrate data flows transmitted on the congested network path to a non-congested network path for transmission through a single path switch (i.e., a single flow migration), thereby rapidly alleviating congestion in the communication network. Thereby, the VPC network running on the communication network may be rapidly recovered from network congestion, achieving efficient network load balancing of the VPC network. Network load balancing refers to allocating traffic loads in the network across a plurality of network path resources to optimize network resource utilization, maximize throughput, minimize reply time, and avoid overloading. As a result, public cloud tenants and cloud applications may rapidly recover from congestion in the VPC network. The congestion processing method for a communication network according to some embodiments of this disclosure enables VPC services and delay-sensitive cloud products on public clouds to rapidly recover from network congestion within a predetermined and extremely short time period, such that upper-layer services experience only minimal or even zero perception of network congestion, thereby not only improving the determinism of VPC network quality but also enhancing the service level agreement (SLA) of delay-sensitive cloud products.

In addition, the congestion processing method for a communication network according to some embodiments of this disclosure operates at a VPC virtual forwarding layer (i.e., a virtual switch layer), such that the method can support applications of public cloud tenants using various network protocols, such as transmission control protocol (TCP) and user datagram protocol (UDP).

The embodiments of this disclosure provide a congestion processing method for a communication network. The method includes a path selection policy of the communication network and a traffic balancing policy of the communication network. The congestion processing method for a communication network is performed by a computer device, which may be, for example, a first device (where data flows are transmitted from the first device to a second device). As shown in FIG. 4, the congestion processing method for a communication network may include, but is not limited to, the following operations S401 to S404:
S401: Determine, from a plurality of network paths between the first device and a second device in the communication network, a first network path being congested.

In operation S401, a plurality of network paths may be provided between the first device and the second device included in the communication network, and any one of the network paths between the first device and the second device may be configured for transmitting data flows between the first device and the second device. The embodiments of this disclosure are illustrated in an example where the first device is a transmitting device that transmits data flows, and the second device is a receiving device that receives data flows. Any one of the network paths between the first device and the second device may be configured for transmitting data flows obtained by the first device to the second device. In the plurality of network paths between the first device and the second device, the number of first network paths determined to be congested may be one or more. For any congested first network path, data flows of specified traffic transmitted on the first network path may be migrated from the first network path to a non-congested network path for transmission in a manner described in operations S402 to S404 of the embodiments of this disclosure, to achieve traffic balancing in the communication network.

S402: Acquire preset migration control information for controlling a migration granularity of a flow migration; and the flow migration indicating migrating data flows being transmitted on the first network path to a non-congested network path, and the migration granularity being configured for indicating migration traffic of the flow migration.

In operation S402, the migration control information refers to information configured for controlling a migration granularity of a flow migration in a traffic balancing policy of the communication network. The flow migration refers to migrating data flows transmitted on a congested network path to a non-congested network path for transmission. The migration granularity may be configured for indicating migration traffic of the flow migration, where the migration traffic is the specified traffic described above.

The migration control information may include a flow mapping group number N and a flow migration group number K. For the flow mapping group number N, each network path may correspond to N groups. The flow mapping group number N refers to the number of groups corresponding to each network path. For example, when each network path corresponds to 8 groups, the flow mapping group number N is 8. Any data flow mapped to any one of the plurality of network paths between the first device and the second device may be mapped to one of N groups corresponding to a corresponding network path. Mapping a data flow to a network path refers to establishing a mapping relationship between the data flow and the network path, and mapping a data flow to a group refers to establishing a mapping relationship between the data flow and the group. For a flow migration group number K, the flow migration group number K refers to the number of groups of data flows migrated in a single flow migration. In a single flow migration, data flows mapped to K groups on a congested network path may be migrated to a non-congested network path for transmission. For example, when data flows mapped to one group on a congested network path may be migrated to a non-congested network path for transmission in a single flow migration, the flow migration group number K is 1.

The flow mapping group number N may control a migration granularity of a flow migration by controlling the traffic mapped to a group. The smaller the flow mapping group number N is, the fewer the groups, and the larger the traffic mapped to a group; conversely, the larger the flow mapping group number N is, the more the groups, and the smaller the traffic mapped to a group. The flow migration group number K may control the migration granularity of a flow migration by controlling the number of groups migrated in the flow migration. The larger the flow migration group number K is, the more groups are migrated, and the more traffic is migrated; conversely, the smaller the flow migration group number K is, the fewer groups are migrated, and the less traffic is migrated. That is, a traffic balancing policy of a communication network may migrate K/N of data flows on a congested network path to a non-congested network path for transmission, where N is an integer greater than 1 and K is a positive integer less than or equal to N.

In some embodiments, the migration control information may be dynamically adjusted according to a congestion level of the communication network. When a congestion level of the communication network is high (for example, when a number of congested network paths in the communication network is greater than or equal to a quantity threshold), the migration granularity controlled by the migration control information may be increased, thereby rapidly alleviating congestion in the communication network. When a congestion level of the communication network is low (for example, when a number of congested network paths in the communication network is less than a quantity threshold), the migration granularity controlled by the migration control information may be reduced, thereby reducing resource consumption of a flow migration.

Increasing a migration granularity controlled by the migration control information may be implemented in any of the following ways: first, decreasing a flow mapping group number N; second, increasing a flow migration group number K; and third, decreasing the flow mapping group number N while increasing the flow migration group number K. Reducing a migration granularity controlled by the migration control information may be implemented in any of the following ways: first, increasing a flow mapping group number N; second, decreasing a flow migration group number K; and third, increasing the flow mapping group number N while decreasing the flow migration group number K.

In some embodiments, the group to which a data flow is mapped specifically refers to a hash slot in a hash bucket of a flow mapping table. The flow mapping table is a hash table. A hash table is a data structure that allows direct access to data via keys, and maps keys to specific positions in the table through a hash function, thereby enabling fast data lookup and access. A hash bucket is a basic unit configured for storing data in a hash table. A hash slot refers to a basic unit configured for storing data in a hash bucket.

In particular, the congestion processing method for a communication network (LBHarp) according to some embodiments of this disclosure constructs a flow mapping table for a path pool between the first device and the second device. The flow mapping table may include a hash bucket corresponding to each of a plurality of network paths between the first device and the second device, and each hash bucket corresponding to a network path may include N hash slots, where each hash slot corresponds to one group. Any data flow mapped to each network path may be mapped to a hash slot in a hash bucket corresponding to a corresponding network path. In an example of a first network path, any data flow mapped to the first network path may be mapped to a hash slot in a hash bucket corresponding to the first network path.

A hash slot may be configured to store a path identifier. Based on this, a path selection policy of the communication network refers to that a data flow mapped to a hash bucket corresponding to each network path may be transmitted via a network path identified by the path identifier stored in a hash slot mapped in the corresponding hash bucket. In an example of a target data flow obtained by the first device, a path selection policy of the communication network may include: receiving a target data flow; acquiring a flow mapping table of the first device, and allocating, according to a flow mapping table, a network path for the target data flow; and transmitting, using the allocated network path, the target data flow.

In a path selection policy of the communication network, a process of allocating, according to a flow mapping table, a network path for the target data flow may include: mapping the target data flow to a target data bucket in the flow mapping table; mapping the target data flow to a target hash slot in the target hash bucket; and determining a network path identified by a path identifier stored in the target hash slot as the allocated network path.

Hash bucket mapping refers to determining a hash bucket to which a target data flow is mapped in a flow mapping table, and the mapping between the data flow and the hash bucket refers to establishing a mapping relationship between the data flow and the hash bucket. The process of hash bucket mapping may include: performing a hash computation on packet information of a target data flow (for example, outer four-tuple information of a five-tuple) to obtain a hash value corresponding to the target data flow; performing, according to the hash value corresponding to the target data flow and the total number of network paths (where the total number of network paths refers to the total number of network paths between the first device and the second device), hash bucket index mapping (where the hash bucket index mapping refers to determining an index of a hash bucket to which the target flow is mapped) on the hash value corresponding to the target data flow to obtain a target hash bucket index; and determining a hash bucket corresponding to the target hash bucket index as a target hash bucket to which the target data flow is mapped.

Similarly, hash slot mapping refers to determining a hash slot in a hash bucket in which a target data flow is mapped, and the mapping between the data flow and the hash slot refers to establishing a mapping relationship between the data flow and the hash slot. The process of hash slot mapping may include: acquiring a hash value corresponding to a target data flow; performing, according to the hash value corresponding to the target data flow and a capacity of a target hash bucket (where the capacity of the target hash bucket refers to a size of the target hash bucket, specifically the number of hash slots included in the target hash bucket), hash slot index mapping on the hash value corresponding to the target data flow (where the hash slot index mapping refers to determining an index of a hash slot to which the target data flow is mapped), to obtain a target hash slot index; and determining a hash slot corresponding to the target hash slot index in the target hash bucket as a target hash slot to which the target data flow is mapped in the target hash bucket.

That is, the congestion processing method for a communication network (LBHarp) according to some embodiments of this disclosure constructs a flow mapping table for network paths in a path pool of each pair of communicating devices in the communication network, and the flow mapping table is configured for selecting a network path for routing (i.e., transmission) of data flows from a virtual machine of a transmitting device. The flow mapping table is a hash table. Each network path is allocated a hash bucket in the hash table, and each hash bucket is a fixed-size array, where the array corresponds to the hash slots described above, and elements of the array are configured for storing path identifiers (path IDs) of available paths. In a default case, the communication network is not congested. Each hash bucket corresponding to a network path stores only a path identifier of the network path itself. In this case, all data flows mapped to a hash bucket corresponding to a network path i (where the network path i refers to any one of the network paths) are routed via the network path i.

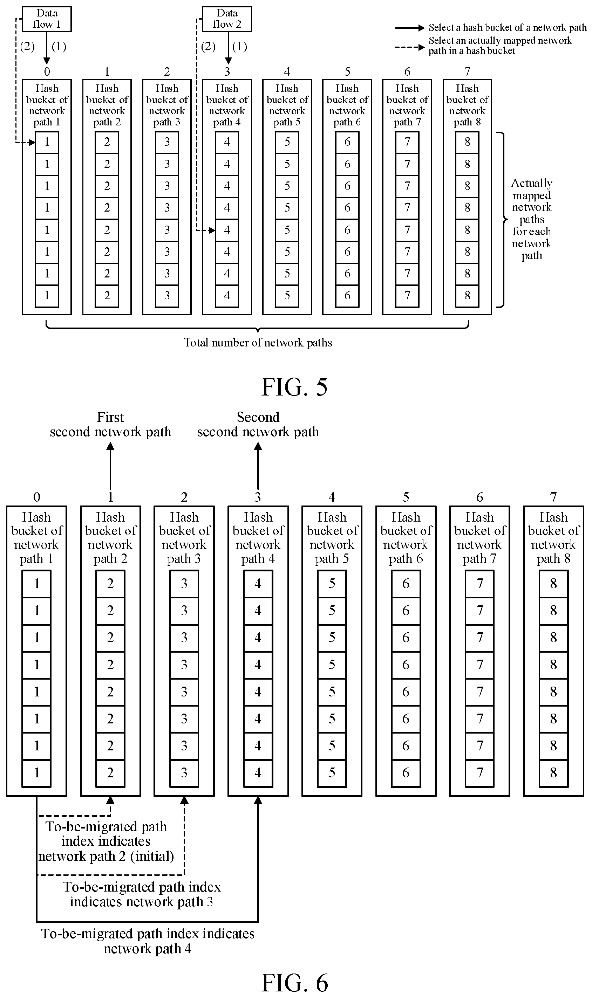

FIG. 5 is an example of a flow mapping table including eight network paths, where a hash bucket has a size (i.e., a hash bucket capacity) of eight, and a path identifier of a network path i is denoted as i. For each data flow, (1) LBHarp uses an outer four-tuple of the data flow as input to calculate a hash value corresponding to the data flow, where the hash value hv corresponding to the data flow is calculated as: hv = hash(4-tuple). LBHarp selects a hash bucket to which a data flow is mapped, where the index of the selected hash bucket is calculated as: hash bucket index = hv % total number of network paths. As shown in FIG. 5, Flow1 (data flow 1) selects a hash bucket corresponding to a network path 1, and Flow2 (data flow 2) selects a hash bucket corresponding to a network path 4. (2) A network path in a hash bucket is selected for the data flow, where an index of a hash slot storing a path identifier of the selected network path is calculated as: hash slot index = hv % hash bucket capacity. As shown in FIG. 5, the hash value corresponding to Flow1 is finally mapped to a first hash slot in a hash bucket corresponding to the network path 1. Therefore, all network packets of Flow1 are routed via the network path 1 stored in the hash slot. The hash value corresponding to Flow2 is finally mapped to a fifth hash slot in a hash bucket corresponding to the network path 4. Therefore, all network packets of Flow2 are routed via the network path 4 stored in the hash slot. Through the hash bucket mapping and hash slot mapping of the flow mapping table, a network path for routing a data flow obtained by the first device may be rapidly selected, thereby improving the path selection efficiency of the communication network.

S403: Select, from the plurality of network paths, a second network path being non-congested.

In operation S403, the number of non-congested second network paths selected from the plurality of network paths may be one or more. For ease of understanding, the number of the second network paths may be denoted as Q, where Q is a positive integer. In detail, the manner of selecting Q non-congested second network paths from the plurality of network paths may include any of the following:
The first manner is to select based on a to-be-migrated path index corresponding to the hash bucket.

In particular, in the flow mapping table, the hash buckets corresponding to a plurality of network paths are arranged in sequence according to the path identifiers of the corresponding network paths. In particular, the hash buckets corresponding to the plurality of network paths may be arranged in ascending order of the path identifiers of the corresponding network paths. For example, in the flow mapping table shown in FIG. 5, the path identifier of the network path 1 is 0, the path identifier of network path 2 is 1, and the path identifier of network path 3 is 2. The hash bucket corresponding to the network path 3 is arranged after the hash bucket corresponding to the network path 2, and the hash bucket corresponding to the network path 2 is arranged after the hash bucket corresponding to the network path 1. Furthermore, a hash bucket corresponding to each network path has a respective to-be-migrated path index, and the to-be-migrated path index of the hash bucket corresponding to each network path may indicate a hash bucket corresponding to any one of the network paths other than the hash bucket corresponding to the network path. A first to-be-migrated path index is a to-be-migrated path index of the hash bucket corresponding to the first network path, and the first to-be-migrated path index may indicate a hash bucket corresponding to any one of the plurality of network paths other than the first network path. Based on this, a process of selecting Q non-congested second network paths from the plurality of network paths may include:
detecting congestion of a network path corresponding to a current hash bucket indicated by the first to-be-migrated path index; when the network path corresponding to the current hash bucket is detected as a non-congested network path, determining the network path corresponding to the current hash bucket as one of the second network paths, and updating the first to-be-migrated path index from indicating the current hash bucket to indicating a next hash bucket after the current hash bucket, where the next hash bucket after the current hash bucket refers to the first hash bucket arranged after the current hash bucket in the flow mapping table; for example, in the flow mapping table shown in FIG. 5, when the current hash bucket is a hash bucket corresponding to the network path 2, the next hash bucket is a hash bucket corresponding to the network path 3; when the network path corresponding to the current hash bucket is detected as a congested network path, updating the first to-be-migrated path index from indicating the current hash bucket to indicating a next hash bucket after the current hash bucket; and repeating the detecting congestion and the updating the pointing of the first to-be-migrated path index until the number of determined second network paths reaches Q.

The congestion check refers to checking the probing results of P consecutive congestion probing operations on a network path. When the probing results of P consecutive congestion probing operations on the network path all indicate that the network path is a congested network path, the network path is determined as a congested network path. When the probing results of P consecutive congestion probing operations on the network path all indicate that the network path is a non-congested network path, the network path is determined as a non-congested network path, where P is a positive integer.

For example, as shown in FIG. 6, assuming that the network path 1 is the congested first network path, two non-congested second network paths are selected from the plurality of network paths. When the network path 1 is congested, a congestion check may be performed starting from the network path 2 corresponding to the hash bucket currently indicated by the to-be-migrated path index of the network path 1. When the network path 2 is checked as a non-congested network path, the network path 2 may be determined as the first non-congested second network path, and the to-be-migrated path index of the network path 1 may be updated from indicating the hash bucket corresponding to the network path 2 to indicating the hash bucket corresponding to the network path 3. A congestion check may be performed on the network path 3 corresponding to the hash bucket currently indicated by the to-be-migrated path index of the network path 1. When the network path 3 is checked as a congested network path, the to-be-migrated path index of the network path 1 may be updated from indicating the hash bucket corresponding to the network path 3 to indicating the hash bucket corresponding to the network path 4. A congestion check may be performed on the network path 4 corresponding to the hash bucket currently indicated by the to-be-migrated path index of the network path 1. When the network path 4 is checked as a non-congested network path, the network path 4 may be determined as the second non-congested second network path, thereby completing the selection of the non-congested second network paths.

In the first manner of selecting non-congested second network paths, by continuously updating the pointing of the to-be-migrated path index and performing congestion checks on the network paths corresponding to the hash buckets indicated by the to-be-migrated path index, repeated checks may be avoided. That is, network paths that have already been checked are not checked again, avoiding a waste of checking resources.

The second manner is to select based on a comparison of communication delay times.

In particular, the communication delay time refers to the RTT value, which is the time for a probe message transmitted by the first device to be transmitted to the second device, plus the time for the reply message returned by the second device to be transmitted back to the first device. A longer communication delay time indicates a higher congestion level of the network path, while a shorter communication delay time indicates a lower congestion level of the network path. Based on this, a process of selecting Q non-congested second network paths from the plurality of network paths may include: acquiring a plurality of reference network paths with probing results of P consecutive congestion probing operations all indicating non-congested network paths; sorting, according to the communication delay times, the plurality of reference network paths; and selecting Q second network paths from the sorted plurality of reference network paths.

In some embodiments, the reference network paths may be sorted in ascending order of communication delay times, and the first Q reference network paths in the sorted plurality of reference network paths may be selected as the Q second network paths. In the second manner of selecting non-congested second network paths, the Q selected second network paths are Q non-congested network paths with relatively low congestion levels in the non-congested network paths. In this way, after flow migration, the data flows transferred to the non-congested network paths do not impose excessive load on the non-congested network paths.

S404: Select, based on the migration control information, from data flows transmitted on the first network path, data flows having traffic corresponding to the migration traffic, and migrate the selected data flows to be transmitted on the second network path.

A traffic balancing policy of a communication network may migrate K/N of data flows on a congested network path to a non-congested network path for transmission. Therefore, in operation S404, based on the control of the migration control information, the data flows having traffic corresponding to the migration traffic, selected from data flows transmitted on the first network path, are K/N of the data flows transmitted on the first network path. In detail, the process of selecting data flows having traffic corresponding to the migration traffic from data flows transmitted on the first network path may include: selecting, K groups from the N groups, the data flows transmitted on the first network path are mapped to the N groups; and determining data flows mapped to the selected K groups as the selected data flows, traffic of the selected data flows being the migration traffic.

In the flow mapping table, groups correspond to hash slots. The process of selecting K groups from the N groups may include: acquiring a flow mapping table of the first device, the flow mapping table comprising a hash bucket corresponding to each of the plurality of network paths, the hash bucket corresponding to each network path comprising N hash slots, each hash slot corresponding to one group being configured to store a path identifier of the respective network path; and determining groups corresponding to K first hash slots in a hash bucket corresponding to the first network path as the K groups. That is, K first hash slots in the hash bucket corresponding to the first network path, each storing a path identifier equal to the path identifier corresponding to the first network path, may be selected. The groups corresponding to the K first hash slots are determined as the selected K groups, and the data flows mapped to the K first hash slots are determined as the data flows mapped to the K groups.

In operation S404, the data flows with the selected traffic corresponding to the migration traffic refer to the data flows mapped to the selected K groups (i.e., the K first hash slots). The data flows mapped to the K groups may be migrated to the Q second network paths for transmission. The migrating the data flows mapped to the K groups to be transmitted on the Q second network paths may include: when Q = 1, migrating the data flows mapped to the K groups to be transmitted on a single second network path; when Q ∈ (1, K), allocating, on a per-group basis, the data flows mapped to the K groups to the Q second network paths, data flows mapped to at least two of the K groups being allocated to a single second network path; and when Q = K, migrating the data flows mapped to the K groups to be transmitted on to K second network paths, different groups corresponding to different second network paths.

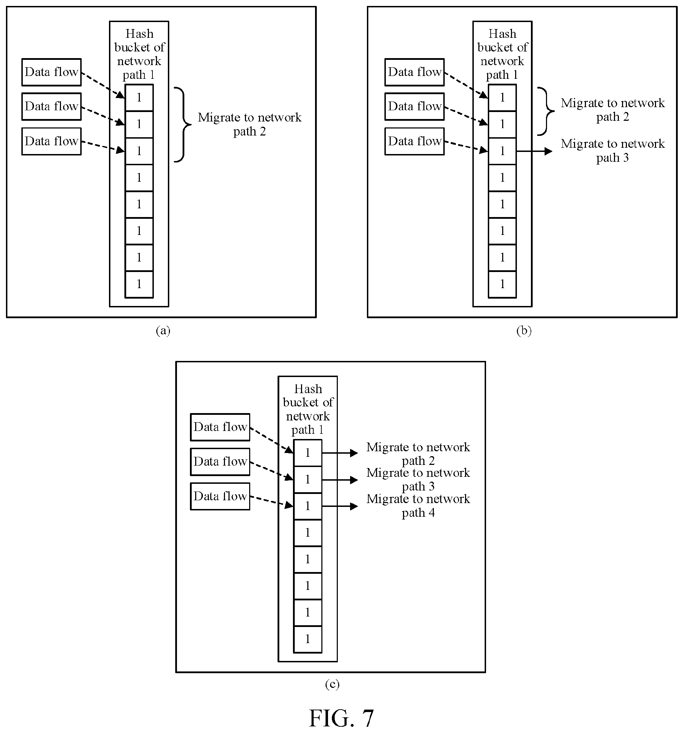

For example, as shown in FIG. 7(a), in the hash bucket corresponding to the network path 1, the data flows mapped to the hash slot 1 to the hash slot 3 are migrated to a non-congested network path for transmission. The non-congested network path is the network path 2, so all data flows mapped to the hash slot 1 to the hash slot 3 are migrated to the network path 2 for transmission. As shown in FIG. 7(b), in the hash bucket corresponding to the network path 1, the data flows mapped to the hash slot 1 to the hash slot 3 are migrated to non-congested network paths for transmission. The non-congested network paths are the network path 2 and the network path 3. Accordingly, the data flows mapped to the hash slot 1 and the hash slot 2 are migrated to the network path 2 for transmission, and the data flows mapped to the hash slot 3 are migrated to the network path 3 for transmission. As shown in FIG. 7(c), in the hash bucket corresponding to the network path 1, the data flows mapped to the hash slot 1 to the hash slot 3 are migrated to non-congested network paths for transmission. The non-congested network paths are the network path 2 to the network path 4. Accordingly, the data flows mapped to the hash slot 1 are migrated to the network path 2 for transmission, the data flows mapped to the hash slot 2 are migrated to the network path 3 for transmission, and the data flows mapped to the hash slot 3 are migrated to the network path 4 for transmission.

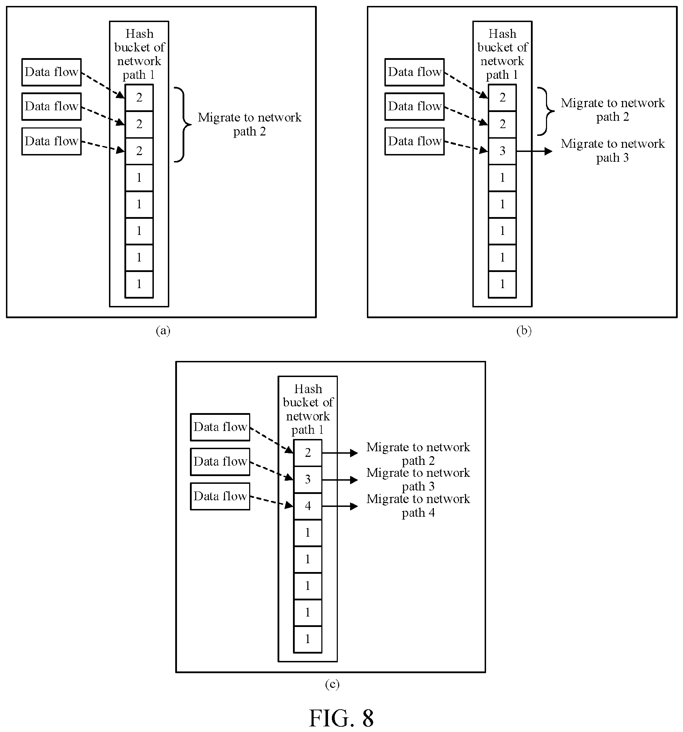

In addition, based on a path selection policy of a flow mapping table (i.e., data flows mapped to hash slots of the flow mapping table are transmitted via network paths corresponding to path identifiers stored in the mapped hash slots), a migration manner of the data flows may include: switching the path identifier of the first network path stored in each of the K first hash slots to a path identifier of the second network path, to migrate the data flows mapped to the K first hash slots to be transmitted on the second network path. In particular, the path identifier stored in each first hash slot is switched to the path identifier of the second network path to which the data flow mapped to the first hash slot is actually migrated. In an example of the allocation manner of migrated non-congested network paths shown in FIG. 7, FIG. 8 illustrates the switching of path identifiers stored in the mapped hash slots. By switching, the data flows originally mapped to the K first hash slots in the hash bucket corresponding to the first network path may be transmitted via the second network paths.

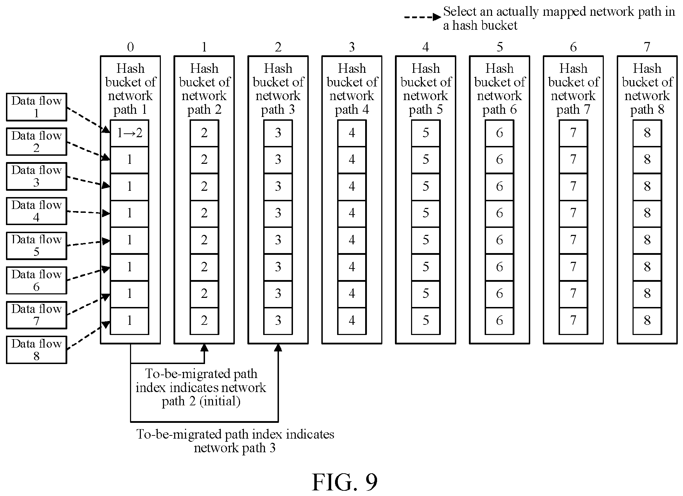

In summary, based on the content described in operations S401 to S404, in an example of selecting non-congested network paths based on the to-be-migrated path index corresponding to hash buckets, the overall process of the traffic balancing policy of the communication network may include: each network path, in addition to a hash bucket, has a to-be-migrated path index that indicates a network path to be subjected to a congestion check. In an initial state, the to-be-migrated path index indicates the next hash bucket following the hash bucket corresponding to the current network path. For example, as shown in FIG. 9, the to-be-migrated path index of the network path 1 indicates the hash bucket corresponding to the network path 2.

In an example of the flow migration group number K = 1, when it is detected that a network path i is congested, LBHarp may rebalance traffic according to the following operations: (1) Congestion checks are performed from the network path indicated by the to-be-migrated path index of the network path i, until the first non-congested network path j is located. (2) In the hash bucket corresponding to the network path i, a hash slot storing the path identifier of network path i is located, and the path identifier stored in the hash slot is switched to the path identifier of the network path j. In this case, the data flows originally mapped to the hash slot are transmitted via the new network path j. (3) The to-be-migrated path index of the network path i is updated to indicate the hash bucket following the hash bucket corresponding to the network path j. According to the congestion level of the network path, the three operations described above may be dynamically repeated, such that more data flows on the network path i are migrated to other non-congested network paths for transmission. When the size of the hash bucket is N, when the traffic mapped to the K hash slots in the hash bucket corresponding to the network path i is migrated, the traffic balancing policy may migrate K/N of the data flows on the congested network path i to non-congested network paths.

In the example shown in FIG. 9, N is 8, K is 1, and the data flow 1 (Flow1) to the data flow 8 (Flow8) all select the network path 1 for routing. When the network path 1 is congested, a congestion check may begin from the network path 2 indicated by the to-be-migrated path index of the network path 1. After locating the non-congested network path 2, the path identifier stored in a hash slot in the hash bucket corresponding to the network path 1, which holds the path identifier of the network path 1 (for example, the path identifier corresponding to the network path 1 is 1 in FIG. 9), may be updated to the path identifier corresponding to the network path 2 (for example, the path identifier corresponding to the network path 2 is 2 in FIG. 9). The to-be-migrated path index of the network path 1 is updated to indicate the hash bucket corresponding to the network path 3. After the above operations, the data flow 1 (Flow1) is routed via the network path 2, while the remaining data flows continue to be routed via the network path 1. Therefore, 12.5% (K/N = 1/8 = 12.5%) of the data flows on the network path 1 are migrated from the network path 1 to the network path 2.

When congestion on the network path i is not alleviated after a traffic balancing operation, the traffic balancing policy of the communication network may rapidly determine that the network path i remains congested and may further migrate additional data flows from the network path i according to the above operations.

In the embodiments of this disclosure, the traffic balancing policy of the communication network has four advantages. First, the congestion conditions of all network paths may be probed in real time, such that a single path switch (i.e., a single flow migration) is sufficient to migrate data flows from a congested network path to non-congested network paths. Second, by controlling the size of the hash bucket of a network path (i.e., the flow mapping group number N) and the flow migration group number K in each flow migration, the migration granularity of a flow migration may be dynamically adjusted according to the congestion condition of the communication network. Third, the traffic balancing policy of LBHarp only may modify the path identifier stored in the hash bucket corresponding to the network path, resulting in extremely low overhead. Compared with data flow-based traffic balancing policies (which modify flow labels of data flows), LBHarp does not may maintain a large number of flow states (e.g., millions of data flows destined for devices), nor does it consume significant internal storage resources of the devices. Fourth, in the case where the number of non-congested network paths per flow migration is Q = 1, the traffic balancing policy of LBHarp ensures that each data flow appears on at most two network paths, and data flows that switch network paths are reordered at most once. Compared with packet-based traffic balancing policies (which migrate data flows on congested network paths to a plurality of network paths), LBHarp does not cause severe packet reordering, thereby reducing the impact on upper-layer applications.

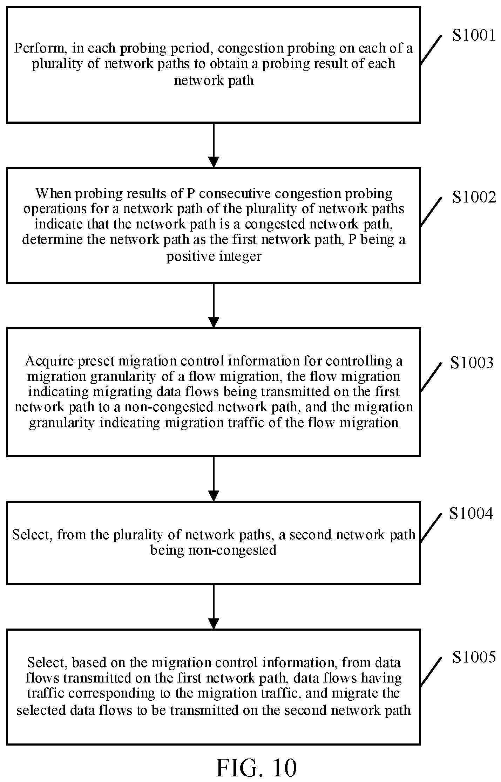

The embodiments of this disclosure provide a congestion processing method for a communication network. The method includes a congestion probing policy of the communication network and a path control policy of the communication network. The congestion processing method for a communication network is performed by a computer device, which may be, for example, a first device (where data flows are transmitted from the first device to a second device). As shown in FIG. 10, the congestion processing method for a communication network may include, but is not limited to, the following operations S1001 to S1005:
S1001: Perform, in each probing period, congestion probing on each of a plurality of network paths to obtain a probing result of each network path.

In the embodiments of this disclosure, one congestion probing being performed on each network path in one probing period. both the traffic balancing policy and the congestion probing policy of the communication network operate at the granularity of network paths, and the network paths are controlled by a path control policy of the communication network. By utilizing the equal-cost multi-path (ECMP) path selection policy of switches in a communication network and supporting Hash Dodging (a control method for a network path), the network paths through which packets pass are controlled by setting the outer UDP source port of the packets and the network interface card port used by a transmitting device. The embodiments of this disclosure construct a path pool for each device in the communication network using this technology.

In particular, the first device and the second device may be connected via two switch layers, both the first device and the second device are connected to switches in a first switch layer, and any two switches in the first switch layer are connected via switches in a second switch layer. A transmission path between either the first device or the second device and a switch in the first switch layer is identified by a port number of a first-type port, and a transmission path between any two switches in the first switch layer is identified by a port number under a second-type port. Based on this, a transmission path identified by a port number of the first-type port may be combined with a transmission path identified by a port number of the second-type port to obtain a network path between the first device and the second device.

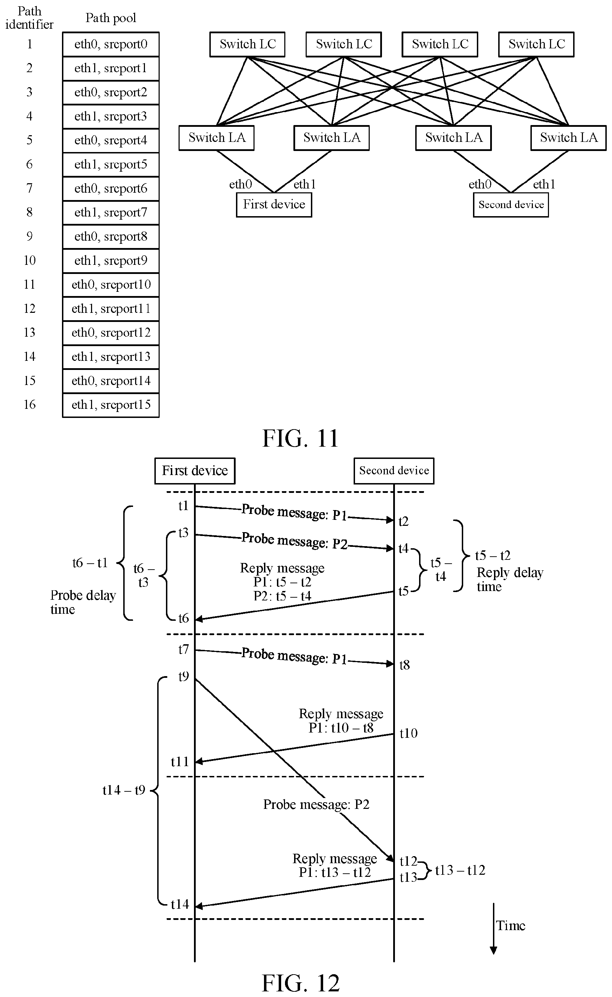

For example, as shown in FIG. 11, the switches in the first switch layer are denoted as LA, and the switches in the second switch layer are denoted as LC. Each LA-to-LA transmission path may be controlled by a unique user datagram protocol (UDP) source port. That is, the second-type port refers to the UDP source port, and the port number of the second-type port corresponds to the UDP source port number (srcport). The transmission path between the first device (or the second device) and LA may be determined by a port selected in the transmission direction of a network interface card of the first device. That is, the first-type port refers to a network interface card port, and the port number of the first-type port corresponds to a network interface card port number (eth). Therefore, the network paths between the first device and the second device may be controlled using (network interface card port number, UDP source port number). FIG. 11 shows an example of a path pool. In this example, the first device and the second device are located in the same module (communication module). The module includes four LC switches, and there are 16 network paths between the two devices, and each network path is uniquely identified by (ethi, srcportj). In addition, a unique path identifier (path ID) is allocated to each network path in the path pool. As shown in FIG. 11, the path identifiers of the 16 network paths between the first device and the second device are 1 to 16.

S1002: When probing results of P consecutive congestion probing operations for a network path of the plurality of network paths indicate that the network path is a congested network path, determine the network path as the first network path, P being a positive integer.

In operation S1001 and operation S1002, the congestion probing policy of the communication network may include: performing, in each probing period, congestion probing on each of a plurality of network paths provided between a first device and a second device to obtain a probing result of each network path, one congestion probing being performed on each network path in one probing period; and when probing results of P consecutive congestion probing operations for any one of the network paths indicate that the network path is a congested network path, determining the network path as a congested first network path in the plurality of network paths, P being a positive integer. In the congestion probing policy of the communication network, congestion determination is performed using the probing results of P consecutive congestion probing operations. When P = 1, congestion determination is performed using the probing result of a single congestion probing, such that the congestion condition of a network path may be rapidly determined. When P > 1, congestion determination is performed using the probing results of a plurality of congestion probing operations, avoiding an occasional erroneous probing result and thereby improving the accuracy of congestion determination for network paths.

In detail, any one of the network paths may be designated as a target network path, and a process of performing congestion probing on the target network path may include:
transmitting, via the target network path, a probe message to the second device; when a reply message returned by the second device is received within M probing periods, calculating a communication delay time of the target network path using a transmission time point of the probe message transmitted by the target network path, a receiving time point of the reply message, and a reply delay time of the second device carried in the reply message, the reply delay time indicating a time elapsed between the second device receiving the probe message and returning the reply message, and M being a positive integer; and
when a communication delay time of the target network path is greater than a time threshold, generating a probing result indicating that the target network path is a congested network path; or, acquiring communication delay information of other network paths in the plurality of network paths, the other network paths indicating network paths on which congestion probing is performed in a same probing period as the target network path, and when a communication delay time of the target network path is greater than a time threshold and there exists, among the other network paths, a network path having communication delay information less than or equal to the time threshold, generating a probing result indicating that the target network path is a congested network path.

The reply delay time (reply_delay_time) refers to the time elapsed between the second device receiving a probe message and returning a reply message. The reply delay time is calculated as the time point at which the second device returns the reply message minus the time point at which the second device receives the probe message. According to a transmission time point of the probe message by the target network path, a receiving time point of the reply message, and a reply delay time of the second device carried in the reply message, the communication delay time of the target network path is calculated as follows: the probe delay time (rtt_total_time) is calculated according to the transmission time point of the probe message and the receiving time point of the reply message. The communication delay time (RTT value) is calculated according to the probe delay time and the reply delay time. The communication delay time (RTT value) is equal to the probe delay time minus the reply delay time, i.e., rtt_total_time-reply_delay_time. The probe delay time refers to the time elapsed between the first device transmitting a probe message and receiving a reply message, and the probe delay time is equal to the time point at which the first device receives the reply message minus the time point at which the first device transmits the probe message.

When a reply message returned by the second device for the probe message transmitted by the target network path is not received within M probing periods, a probing result indicating that the target network path is a congested network path is generated. Alternatively, when a reply message returned by the second device for the probe message transmitted by the target network path is not received within M probing periods and there exists a network path, in other network paths, for which a corresponding reply message is received within the M probing periods, a probing result indicating that the target network path is a congested network path is generated, the other network paths indicating network paths on which congestion probing is performed in a same probing period as the target network path in the plurality of network paths.

For example, after the start of a first probing period, the first device may transmit an RTT probe message to each network path, and the RTT probe message transmitted to each network path includes a path identifier of the corresponding network path. As shown in FIG. 12, the first device transmits RTT probe messages for the network path 1 (denoted as P1 in FIG. 12) and the network path 2 (denoted as P2 in FIG. 12) at time t1 and time t3, respectively. After receiving the RTT probe message, the second device records the path identifier carried in the RTT probe message and the receiving time of the RTT probe message.

When a probing period is reached, the second device returns an RTT reply message to the first device. The reply message may carry the path identifiers of all paths subjected to congestion probing within the probing period, as well as a time interval from receiving RTT probe messages for each network path to transmitting the RTT reply message (referred to as a reply delay time (reply_delay_time)). As shown in FIG. 12, when a probing period is reached (i.e., at time t5), the second device transmits an RTT reply message. The RTT reply message may include the path identifier of the network path 1, the reply_delay_time (t5 - t2) of the network path 1, the path identifier of the network path 2, and the reply_delay_time (t5 - t4) of the network path 2.

After receiving the RTT reply message, the first device calculates a time interval from receiving the RTT reply message to transmitting an RTT probe message by each network path, referred to as a probe delay time (rtt_total_time). The communication delay time (i.e., RTT value) of each network path is calculated according to reply_delay_time and rtt_total_time, where the RTT value = rtt_total_time - reply_delay_time. As shown in FIG. 12, the second device receives the RTT reply message at time t6. Therefore, the rtt_total_time of the network path 1 is (t6 - t1), and the RTT value of the network path 1 is (t6 - t1 - (t5 - t2)). The rtt_total_time of the network path 2 is (t6 - t3), and the RTT value of the network path 2 is (t6 - t3 - (t5 - t4)).

When the RTT value of a network path is greater than a preset congestion threshold (i.e., the time threshold mentioned above), the network path may be determined as a congested network path. As shown in FIG. 12, the first device transmits an RTT probe message for the network path 2 at time t9 in a second probing period. Since the network path 2 is congested, the RTT probe message arrives at the second device at time t12 in a third probing period. The second device returns an RTT reply message for the network path 2 at time t13. At time t14, the first device receives the RTT reply message for the network path 2. In this case, the RTT value of the network path 2 is (t14 - t9 - (t13 - t12)), which is greater than the congestion threshold (i.e., the time threshold mentioned above), and thus it is determined that the network path 2 is congested.

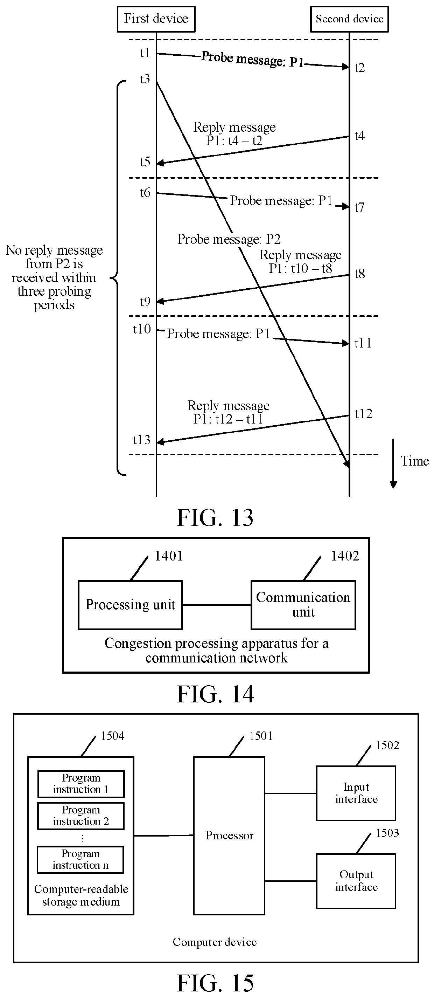

In the congestion probing policy described above, the time at which the first device determines whether a network path is congested (i.e., rtt_total_time) depends on the congestion level of the communication network. When the communication network is severely congested, the time at which the first device learns that a network path is congested is also delayed (i.e., an increase in the rtt_total_time value), and the duration of such delay is unpredictable. In this case, the congestion probing policy of the communication network cannot provide a predetermined time for detecting a congested path. As shown in FIG. 13, the first device transmits an RTT probe message for the network path 2 at time t3 in a first probing period. However, network path 2 is severely congested, resulting in the first device not receiving an RTT reply message for the network path 2 within three probing periods. To ensure that congestion may be detected within a predetermined time period, LBHarp determines a network path as congested when no RTT reply message is received for M consecutive probing periods (where M is a positive integer). As shown in FIG. 12, after no RTT reply message is received within three probing periods (M = 3), the first device determines network path 2 as a congested network path.

In the examples of FIG. 12 and FIG. 13, the second device uniformly returns an RTT reply message at the end of a probing period. The RTT reply message is directed to all network paths subjected to congestion probing within the probing period for which corresponding RTT probe messages have been received, rather than returning an RTT reply message for each RTT probe message individually, thereby reducing the overhead of congestion probing. For the case of uniformly returning an RTT reply message, when the network path used by the second device to return the RTT reply message is congested, the calculated RTT value increases and may even exceed the threshold. However, in this case, the network path probed by the first device is not actually congested. To distinguish this case, when the RTT values of all probed network paths within a probing period exceed a time threshold, or when no RTT reply message is received for all probed network paths within M probing periods, it may be determined that the network path through which the RTT reply message is returned is congested, rather than that the network paths probed by the first device are congested. That is, when the RTT values of all probed network paths within a probing period exceed a time threshold, or when no RTT reply message is received for all probed network paths within M probing periods, the first device does not determine these network paths as congested.

For the case where the second device returns an RTT reply message for each RTT probe message individually, the network path configured for transmitting the RTT probe message and the network path configured for returning the RTT reply message are the same. When the network path is congested, the RTT value calculated by the first device increases, or the first device may not receive the RTT reply message for a long time. In this case, it may be directly determined whether a network path is congested according to the RTT value, or according to whether an RTT reply message is received within M probing periods, without considering other network paths, thereby improving the accuracy of congestion probing results.

S1003: Acquire preset migration control information for controlling a migration granularity of a flow migration, the flow migration indicating migrating data flows being transmitted on the first network path to a non-congested network path, and the migration granularity indicating migration traffic of the flow migration.

In the embodiments of this disclosure, the execution process of operation S1003 is the same as the execution process of operation S402 in the embodiments shown in FIG. 4 described above. For details of the execution process of operation S1003, reference may be made to the relevant description of operation S402 in the embodiments shown in FIG. 4 described above, which are not repeated herein.

S1004: Select, from the plurality of network paths, a second network path being non-congested.

In the embodiments of this disclosure, the execution process of operation S1004 is the same as the execution process of operation S403 in the embodiments shown in FIG. 4 described above. For details of the execution process of operation S1004, reference may be made to the relevant description of operation S403 in the embodiments shown in FIG. 4 described above, which are not repeated herein.

S1005: Select, based on the migration control information, from data flows transmitted on the first network path, data flows having traffic corresponding to the migration traffic, and migrate the selected data flows to be transmitted on the second network path.

In the embodiments of this disclosure, the execution process of operation S1005 is the same as the execution process of operation S404 in the embodiments shown in FIG. 4 described above. For details of the execution process of operation S1005, reference may be made to the relevant description of operation S404 in the embodiments shown in FIG. 4 described above, which are not repeated herein.

In the embodiments of this disclosure, an advantage of the congestion probing policy of the communication network is that: First, since congestion probing for network paths is performed in probing periods, congestion conditions of network paths can be detected on a periodic time scale, and the congestion condition of a network path can be detected within a predetermined time period (at most M probing periods). Second, congestion conditions of all network paths are probed in real time, thereby enabling accurate locating of non-congested network paths for flow migration. Third, for any two devices in the communication network, congestion probing is performed at the granularity of physical network paths. Since the number of network paths in a communication module is typically only 16 or 32, the congestion probing overhead is very low.

FIG. 14 is a schematic structural diagram of a congestion processing apparatus for a communication network according to some embodiments of this disclosure. The congestion processing apparatus for a communication network may be disposed in a computer device according to some embodiments of this disclosure. The computer device may be a transmitting device (e.g., a first device) that transmits data flows in the communication network. The communication network includes the first device and a second device, and a plurality of network paths are provided between the first device and the second device. Any one of the network paths is configured for transmitting data flows between the first device and the second device. The congestion processing apparatus for a communication network shown in FIG. 14 may be a computer program running in a computer device, and the congestion processing apparatus for a communication network may be configured to perform part or all of the operations in the method embodiments shown in FIG. 4 or FIG. 10. Referring to FIG. 14, the congestion processing apparatus for a communication network may include the following units:
a processing unit 1401, configured to determine, from a plurality of network paths between the first device and a second device in the communication network, a first network path being congested;
the processing unit 1401, further configured to acquire preset migration control information for controlling a migration granularity of a flow migration, the flow migration indicating migrating data flows being transmitted on the first network path to a non-congested network path, and the migration granularity indicating migration traffic of the flow migration;
the processing unit 1401, further configured to select, from the plurality of network paths, a second network path being non-congested;
the processing unit 1401, further configured to select, based on the migration control information, from data flows transmitted on the first network path, data flows having traffic corresponding to the migration traffic; and
a communication unit 1402, configured to migrate the selected data flows to be transmitted on the second network path.

In some embodiments, the migration control information includes a flow mapping group number N and a flow migration group number K, N being an integer greater than 1, and K being a positive integer less than or equal to N. Each data flow mapped to a network path of the plurality of network paths is mapped to one of N groups corresponding to the network path.

The processing unit 1401 is configured to select K groups from N groups, the data flows transmitted on the first network path are mapped to the N groups; and determine data flows mapped to the selected K groups as the selected data flows, traffic of the selected data flows being the migration traffic.

In some embodiments, the processing unit 1401 is configured to acquire a flow mapping table of the first device, the flow mapping table comprising a hash bucket corresponding to each of the plurality of network paths, the hash bucket corresponding to each network path comprising N hash slots, each hash slot corresponding to one group being configured to store a path identifier of the respective network path; and
determine groups corresponding to K first hash slots in a hash bucket corresponding to the first network path as the K groups.

In some embodiments, data flows mapped to a hash slot in the flow mapping table are transmitted via a network path identified by a path identifier stored in the hash slot. The processing unit 1401 is configured to switch the path identifier of the first network path stored in each of the K first hash slots to a path identifier of the second network path, to migrate the data flows mapped to the K first hash slots to be transmitted on the second network path.

In some embodiments, each hash bucket is allocated with a respective to-be-migrated path index, a first to-be-migrated path index indicates a hash bucket corresponding to any one of the plurality of network paths other than the first network path; and the number of second network paths is Q, Q being a positive integer less than or equal to K.

The processing unit 1401 is configured to detect congestion of a network path corresponding to a current hash bucket indicated by the first to-be-migrated path index;
when the network path corresponding to the current hash bucket is detected as a non-congested network path, determine the network path corresponding to the current hash bucket as one of the second network paths, and update the first to-be-migrated path index from indicating the current hash bucket to indicating a next hash bucket after the current hash bucket;
when the network path corresponding to the current hash bucket is detected as a congested network path, update the first to-be-migrated path index from indicating the current hash bucket to indicating a next hash bucket after the current hash bucket; and
repeat the detecting congestion and the updating the first to-be-migrated path index until the number of determined second network paths reaches Q.

In some embodiments, the communication unit 1402 is further configured to receive a target data flow; acquire a flow mapping table of the first device, and allocate, according to the flow mapping table, a network path for the target data flow.

The communication unit 1402 is further configured to transmit, using the allocated network path, the target data flow.

In some embodiments, the processing unit 1401 is configured to map the target data flow to a target data bucket in the flow mapping table; map the target data flow to a target hash slot in the target hash bucket; and determine a network path identified by a path identifier stored in the target hash slot as the allocated network path.

In some embodiments, the number of second network paths is Q, Q being a positive integer less than or equal to K. The communication unit 1402 is configured to migrate the selected data flows to be transmitted on the second network path. The communication unit 1402 is specifically configured to
when Q = 1, migrate the data flows mapped to the K groups to be transmitted on a single second network path;
when Q ∈ (1, K), allocate, on a per-group basis, the data flows mapped to the K groups to the Q second network paths, data flows mapped to at least two of the K groups being allocated to a single second network path; and
when Q = K, migrate the data flows mapped to the K groups to be transmitted on to K second network paths, different groups corresponding to different second network paths.

In some embodiments, the processing unit 1401 is further configured to adjust, according to a congestion level of the communication network, the migration control information,
the flow mapping group number N controlling a migration granularity of the flow migration by controlling traffic mapped to a group; and the flow migration group number K controlling a migration granularity of the flow migration by controlling the number of groups migrated in the flow migration.

In some embodiments, the processing unit 1401 is configured to perform, in each probing period, congestion probing on each of the plurality of network paths to obtain a probing result of each network path; and when probing results of P consecutive congestion probing operations for a network path of the plurality of network paths indicate that the network path is a congested network path, determine the network path as the first network path, P being a positive integer.

In some embodiments, any one of the network paths is designated as a target network path. The communication unit 1402 is configured to transmit, via the target network path, a probe message to the second device; when a reply message returned by the second device is received within M probing periods, calculate a communication delay time of the target network path using a transmission time point of the probe message transmitted by the target network path, a receiving time point of the reply message, and a reply delay time of the second device carried in the reply message, the reply delay time indicating a time elapsed between the second device receiving the probe message and returning the reply message, and M being a positive integer; and when a communication delay time of the target network path is greater than a time threshold, generate a probing result indicating that the target network path is a congested network path; or, acquire communication delay information of other network paths in the plurality of network paths, the other network paths indicating network paths on which congestion probing is performed in a same probing period as the target network path, and when a communication delay time of the target network path is greater than a time threshold and there exists, among the other network paths, a network path having communication delay information less than or equal to the time threshold, generate a probing result indicating that the target network path is a congested network path.

In some embodiments, the communication unit 1402 is further configured to when a reply message returned by the second device is not received within M probing periods, generate a probing result indicating that the target network path is a congested network path; or when a reply message returned by the second device is not received within M probing periods and there exists a network path, among the other network paths, a network path for which a corresponding reply message is received within the M probing periods, generate a probing result indicating that the target network path is a congested network path.

In some embodiments, the first device and the second device are connected via two switch layers, both the first device and the second device are connected to switches in a first switch layer, and any two switches in the first switch layer are connected via switches in a second switch layer. A transmission path between either the first device or the second device and a switch in the first switch layer is identified by a port number of a first-type port, and a transmission path between any two switches in the first switch layer is identified by a port number of a second-type port.

The processing unit 1401 is further configured to combine a transmission path identified by a port number of the first-type port with a transmission path identified by a port number of the second-type port to obtain a network path between the first device and the second device.

According to some embodiments of this disclosure, the units in the congestion processing apparatus for a communication network shown in FIG. 14 may be implemented separately, or part or all of the units may be combined into one or more additional units. Alternatively, one or more of the units may be further divided into a plurality of functionally smaller units. This may achieve the same operations without affecting the implementation of the technical effects of the embodiments of this disclosure. The above units are divided based on logical functions. In practical applications, the functions of a single unit may be implemented by a plurality of units, or the functions of a plurality of units may be implemented by a single unit. In other embodiments of this disclosure, the congestion processing apparatus for a communication network may further include other units. In practical applications, these functions may be implemented with the assistance of other units, and may be implemented through the cooperation of a plurality of units.

According to another embodiment of this disclosure, the congestion processing apparatus for a communication network shown in FIG. 14 may be constructed, and the congestion processing method for a communication network according to some embodiments of this disclosure may be implemented, by running a computer program capable of executing the operations involved in part or all of the methods shown in FIG. 4 or FIG. 10 on a general-purpose computing device such as a computer including processing elements and storage elements, such as a central processing unit (CPU), a random access memory (RAM), and a read-only memory (ROM). The computer program may be stored on a computer-readable storage medium, and may be loaded into the above computing device via the computer-readable storage medium and executed therein.

In the embodiments of this disclosure, a congested first network path may be determined from a plurality of network paths between the first device and the second device. The embodiments of this disclosure provide congestion detection capability, enabling congested network paths to be identified promptly, thereby facilitating the rapid mitigation of congestion on the network paths. After determining a congested first network path from the plurality of network paths between the first device and the second device, preset migration control information may be acquired. The migration control information may be configured for controlling a migration granularity of a flow migration. The flow migration refers to migrating data flows transmitted on a congested network path to a non-congested network path for transmission, and the migration granularity may be configured for indicating migration traffic of the flow migration. The embodiments of this disclosure may implement controlled flow migration based on the migration control information. Such controlled flow migration may avoid congestion on a network path to which the data flow is migrated due to excessive migration traffic, or may avoid congestion on a network path from which the data flow is migrated failing to alleviate due to insufficient migration traffic. After acquiring the migration control information, data flows having traffic corresponding to the migration traffic may be selected, based on the control of the migration control information, from data flows transmitted on the first network path, and the selected data flows are migrated to a non-congested second network path between the first device and the second device for transmission. For a congested network path in a communication network, the embodiments of this disclosure may, through a single flow migration operation, migrate a data flow of specified traffic (i.e., the migration traffic) from the congested network path to a non-congested network path. The flow migration is performed only once rather than a plurality of times, and the migration target is a non-congested network path rather than a congested network path, thereby enabling rapid alleviation of congestion in the communication network.

FIG. 15 is a schematic structural diagram of a computer device according to some embodiments of this disclosure. The computer device shown in FIG. 15 includes at least a processor 1501, an input interface 1502, an output interface 1503, and a computer-readable storage medium 1504. The processor 1501, the input interface 1502, the output interface 1503, and the computer-readable storage medium 1504 may be connected via a bus or other means.

The computer-readable storage medium 1504 may be stored in a memory of the computer device. The computer-readable storage medium 1504 is configured for storing a computer program, and the computer program includes computer instructions. The processor 1501 is configured to execute the computer program stored in the computer-readable storage medium 1504. The processor 1501 (also referred to as a central processing unit (CPU)) is the computing core and control core of the computer device and is configured to execute computer programs, and is specifically configured to load and execute computer programs to implement corresponding method processes or corresponding functions.

The embodiments of this disclosure further provide a computer-readable storage medium (Memory). The computer-readable storage medium is a memory device in a computer device and is configured for storing programs and data. The computer-readable storage medium herein may include a built-in storage medium in the computer device, and may include an external storage medium supported by the computer device. The computer-readable storage medium provides a storage space, and the storage space stores an operating system of the computer device. Furthermore, a computer program adapted to be loaded and executed by the processor is also stored in the storage space. The computer-readable storage medium may be a high-speed RAM, or a nonvolatile memory, such as at least one disk storage device. In some embodiments, the computer-readable storage medium may be at least one computer-readable storage medium located remotely from the foregoing processor.

The computer device may be a transmitting device (e.g., a first device) that transmits data flows in the communication network. The communication network includes the first device and a second device, and a plurality of network paths are provided between the first device and the second device. Any one of the network paths is configured for transmitting data flows between the first device and the second device. In a specific implementation, the processor 1501 may load and execute a computer program stored in the computer-readable storage medium 1504, to implement corresponding operations in the methods shown in FIG. 2 or FIG. 6 described above.

The embodiments of this disclosure further provide a computer program product including a computer program, the computer program being stored in a computer-readable storage medium. A processor of a computer device reads the computer program from the computer-readable storage medium and executes the computer program, such that the computer device performs the congestion processing method for a communication network described above.

## Claims

1. A congestion processing method for a communication network, executable by a first device in the communication network, and the method comprising:
determining, from a plurality of network paths between the first device and a second device in the communication network, a first network path being congested;
acquiring preset migration control information for controlling a migration granularity of a flow migration, the flow migration indicating migrating data flows being transmitted on the first network path to a non-congested network path, and the migration granularity indicating migration traffic of the flow migration;
selecting, from the plurality of network paths, a second network path being non-congested; and
selecting, based on the migration control information, from data flows transmitted on the first network path, data flows having traffic corresponding to the migration traffic, and migrating the selected data flows to be transmitted on the second network path.

2. The method according to claim 1, wherein the migration control information comprises a flow mapping group number N and a flow migration group number K, N being an integer greater than 1, and K being a positive integer less than or equal to N; and each data flow mapped to a network path of the plurality of network paths is mapped to one of N groups corresponding to the network path; and
the selecting, based on the migration control information, from data flows transmitted on the first network path, data flows having traffic corresponding to the migration traffic comprises:
selecting K groups from N groups, the data flows transmitted on the first network path are mapped to the N groups; and
determining data flows mapped to the selected K groups as the selected data flows, traffic of the selected data flows being the migration traffic.

3. The method according to claim 1 or 2, wherein the selecting K groups from N groups comprises:
acquiring a flow mapping table of the first device, the flow mapping table comprising a hash bucket corresponding to each of the plurality of network paths, the hash bucket corresponding to each network path comprising N hash slots, each hash slot corresponding to one group being configured to store a path identifier of the respective network path; and
determining groups corresponding to K first hash slots in a hash bucket corresponding to the first network path as the K groups.

4. The method according to any one of claims 1 to 3, wherein data flows mapped to a hash slot in the flow mapping table are transmitted via a network path identified by a path identifier stored in the hash slot; and the migrating the selected data flows to be transmitted on the second network path comprises:
switching the path identifier of the first network path stored in each of the K first hash slots to a path identifier of the second network path, to migrate the data flows mapped to the K first hash slots to be transmitted on the second network path.

5. The method according to any one of claims 1 to 4, wherein each hash bucket is allocated with a respective to-be-migrated path index, a first to-be-migrated path index indicates a hash bucket corresponding to any one of the plurality of network paths other than the first network path; and the number of second network paths is Q, Q being a positive integer less than or equal to K; and
the selecting, from the plurality of network paths, a second network path being non-congested comprises:
detecting congestion of a network path corresponding to a current hash bucket indicated by the first to-be-migrated path index;
when the network path corresponding to the current hash bucket is detected as a non-congested network path, determining the network path corresponding to the current hash bucket as one of the second network paths, and updating the first to-be-migrated path index from indicating the current hash bucket to indicating a next hash bucket after the current hash bucket;
when the network path corresponding to the current hash bucket is detected as a congested network path, updating the first to-be-migrated path index from indicating the current hash bucket to indicating a next hash bucket after the current hash bucket; and
repeating the detecting congestion and the updating the first to-be-migrated path index until the number of determined second network paths reaches Q.

6. The method according to any one of claims 1 to 5, further comprising:
receiving a target data flow;
acquiring a flow mapping table of the first device, and allocating, according to the flow mapping table, a network path for the target data flow; and
transmitting, using the allocated network path, the target data flow.

7. The method according to any one of claims 1 to 6, wherein the allocating, according to the flow mapping table, a network path for the target data flow comprises:
mapping the target data flow to a target data bucket in the flow mapping table;
mapping the target data flow to a target hash slot in the target hash bucket; and
determining a network path identified by a path identifier stored in the target hash slot as the allocated network path.

8. The method according to any one of claims 1 to 7, wherein the number of second network paths is Q, Q being a positive integer less than or equal to K; and the migrating the selected data flows to be transmitted on the second network path comprises:
migrating the data flows mapped to the K groups to be transmitted on the Q second network paths, comprising:
when Q = 1, migrating the data flows mapped to the K groups to be transmitted on a single second network path;
when Q ∈ (1, K), allocating, on a per-group basis, the data flows mapped to the K groups to the Q second network paths, data flows mapped to at least two of the K groups being allocated to a single second network path; and
when Q = K, migrating the data flows mapped to the K groups to be transmitted on to K second network paths, different groups corresponding to different second network paths.

9. The method according to any one of claims 1 to 8, further comprising:
adjusting, according to a congestion level of the communication network, the migration control information,
the flow mapping group number N controlling a migration granularity of the flow migration by controlling traffic mapped to a group; and the flow migration group number K controlling a migration granularity of the flow migration by controlling the number of groups migrated in the flow migration.

10. The method according to any one of claims 1 to 9, wherein the determining, from a plurality of network paths between the first device and a second device in the communication network, a first network path being congested comprises:
performing, in each probing period, congestion probing on each of the plurality of network paths to obtain a probing result of each network path; and
when probing results of P consecutive congestion probing operations for a network path of the plurality of network paths indicate that the network path is a congested network path, determining the network path as the first network path, P being a positive integer.

11. The method according to any one of claims 1 to 10, wherein any one of the plurality of network paths is designated as a target network path; and a process of performing congestion probing on the target network path comprises:
transmitting, via the target network path, a probe message to the second device;
when a reply message returned by the second device is received within M probing periods, calculating a communication delay time of the target network path using a transmission time point of the probe message transmitted by the target network path, a receiving time point of the reply message, and a reply delay time of the second device carried in the reply message, the reply delay time indicating a time elapsed between the second device receiving the probe message and returning the reply message, and M being a positive integer; and
when a communication delay time of the target network path is greater than a time threshold, generating a probing result indicating that the target network path is a congested network path; or, acquiring communication delay information of other network paths in the plurality of network paths, the other network paths indicating network paths on which congestion probing is performed in a same probing period as the target network path, and when a communication delay time of the target network path is greater than a time threshold and there exists, among the other network paths, a network path having communication delay information less than or equal to the time threshold, generating a probing result indicating that the target network path is a congested network path.

12. The method according to any one of claims 1 to 11, further comprising:
when a reply message returned by the second device is not received within M probing periods, generating a probing result indicating that the target network path is a congested network path; or
when a reply message returned by the second device is not received within M probing periods and there exists a network path, among the other network paths, a network path for which a corresponding reply message is received within the M probing periods, generating a probing result indicating that the target network path is a congested network path.

13. The method according to any one of claims 1 to 12, wherein the first device and the second device are connected via two switch layers, both the first device and the second device are connected to switches in a first switch layer, and any two switches in the first switch layer are connected via switches in a second switch layer; and a transmission path between either the first device or the second device and a switch in the first switch layer is identified by a port number of a first-type port, and a transmission path between any two switches in the first switch layer is identified by a port number of a second-type port; and
the method further comprises:
combining a transmission path identified by a port number of the first-type port with a transmission path identified by a port number of the second-type port to obtain a network path between the first device and the second device.

14. A congestion processing apparatus for a communication network, the apparatus being disposed in a first device in the communication network; and the apparatus comprising:
a processing unit, configured to determine, from a plurality of network paths between the first device and a second device in the communication network, a first network path being congested;
the processing unit, further configured to acquire preset migration control information for controlling a migration granularity of a flow migration, the flow migration indicating migrating data flows being transmitted on the first network path to a non-congested network path, and the migration granularity indicating migration traffic of the flow migration;
the processing unit, further configured to select, from the plurality of network paths, a second network path being non-congested;
the processing unit, further configured to select, based on the migration control information, from data flows transmitted on the first network path, data flows having traffic corresponding to the migration traffic; and
a communication unit, configured to migrate the selected data flows to be transmitted on the second network path.

15. A computer device, comprising:
a processor configured to implement a computer program; and
a computer-readable storage medium having a computer program stored therein, the computer program being configured to be loaded and executed by the processor to perform the congestion processing method for a communication network according to any one of claims 1 to 13.

16. A computer-readable storage medium, having a computer program stored therein, the computer program being configured to be loaded and executed by a processor to perform the congestion processing method for a communication network according to any one of claims 1 to 13.

17. A computer program product, comprising a computer program, the computer program, when executed by a processor, implementing the congestion processing method for a communication network according to any one of claims 1 to 13.
